Europäisches Patentamt

European Patent Office

Office européen des brevets

(19)

(11) Veröffentlichungsnummer: **0 305 906**
**A2**

## (12) EUROPÄISCHE PATENTANMELDUNG

(21) Anmeldenummer: 88113904.2

(22) Anmeldetag: 26.08.88

(51) Int. Cl.4: **H02J 13/00**

(30) Priorität: 29.08.87 DE 3728950

(43) Veröffentlichungstag der Anmeldung:
08.03.89 Patentblatt 89/10

(84) Benannte Vertragsstaaten:
**DE ES FR GB IT SE**

(71) Anmelder: **Bayerische Motoren Werke Aktiengesellschaft**
**BMW-Haus Postfach 40 02 40 Petuelring 130**
**- AJ-33**
**D-8000 München 40(DE)**

(72) Erfinder: **Rüger, Bernhard**
**Tüllesamstrasse 7**
**D-8000 München 45(DE)**

(54) **Schaltungsanordnung.**

(57) Bei einer Schaltungsanordnung für mehrere elektrische Verbraucher, die abhängig von individuellen Ausgangszählerständen eines zugehörigen Zählers dann geschaltet sind, wenn die für eine Veränderung des Zählerstands um eine Einheit in gleicher Weise angesteuerten Zähler einen Zählerendstand erreichen, ist mindestens einem der Zähler ein weiterer Verbraucher zugeordnet, der dann mit Hilfe des Zählers geschaltet ist, wenn der Zähler einen Zählerstand zwischen dem Ausgangszählerstand und dem Zählerendstand aufweist.

EP 0 305 906 A2

## Schaltungsanordnung für mehrere elektrische Verbraucher

Die Erfindung bezieht sich auf eine Schaltungsanordnung nach dem Oberbegriff des Patentanspruchs 1.

Eine derartige Schaltungsanordnung ist aus der nicht veröffentlichten deutschen Patentanmeldung P 37 ......... der Mitec GmbH bekannt. Dabei ist pro Verbraucher ein Zähler erforderlich, der als Rückwärtszähler arbeitet und auf ein Befehlssignal hin einen vorprogrammierten Zählerstand annimmt. Durch entsprechende Zählimpulse wird der Rückwärtszähler bis auf den Wert 0 herabgezählt. Ist dieser Wert erreicht, so führt das dann am Ausgang des Zählers sich ändernde Signal dazu, einen Verbraucher oder dgl. zu schalten. Voraussetzung hierfür ist allerdings, daß im Anschluß an den letzten Zählimpuls ein gesondertes Schaltsignal auf ein logisches Verknüpfungsglied gegeben wird, auf das auch der Ausgang des Zählers geführt ist.

Aufgabe der vorliegenden Erfindung ist es, die Schaltungsanordnung der eingangs genannten Art hinsichtlich der Zahl der erforderlichen Zähler, die für eine Gesamtzahl von mehreren Verbrauchern erforderlich ist, zu verringern.

Die Erfindung löst diese Aufgabe durch die kennzeichnenden Merkmale des Patentanspruchs 1. Mindestens einem der Zähler ist somit mindestens noch ein weiterer Verbraucher zugeordnet, der bei einem Zählerzwischenstand geschaltet werden kann. Hierzu kann wie bei der eingangs genannten Schaltungsanordnung ein zusätzliches gesondertes Schaltsignal und ein entspechendes logisches Verknüpfungsglied vorgesehen sein. Somit sind, sofern mehreren Zählern jeweils mehrere Verbraucher zugeordnet sind, nur noch wenige (Rückwärts-) Zähler erforderlich. Es ist dabei sogar möglich, für eine begrenzte Anzahl von Verbrauchern nur noch einen Zähler vorzusehen. Ferner bietet sich die Möglichkeit, Verbraucher, die in einem funktionellen Zusammenhang stehen, nur einem der Zähler zuzuordnen und beispielsweise dann, wenn es erforderlich ist, besondere Sicherheitsmaßnahmen (Redundanz) zu ergreifen, diesen Verbrauchern zwei derartige Zähler zur Verfügung zu stellen. Sofern mehr als zwei Verbraucher von diesen beiden Zählern geschaltet werden, ergibt sich bei Erhöhung der Ausfallsicherheit dennoch eine Reduzierung der Gesamtzahl von Zählern.

Die Betriebssicherheit der Schaltungsanordnung läßt sich durch die Merkmale des Patentanspruchs 2 weiter erhöhen. Dadurch wird erreicht, daß auch dann, wenn mehreren Zählern jeweils mehrere Verbraucher zugeordnet sind, pro Zählerstand des Gesamtzählbereichs jeweils nur ein Verbraucher geschaltet ist. Eine Überlappung der verschiedenen Zählbereiche wird dadurch ausgeschlossen. Der Gesamtzählbereich ist der Bereich, der durch die Vereinigung der individuellen Zählbereiche gebildet wird.

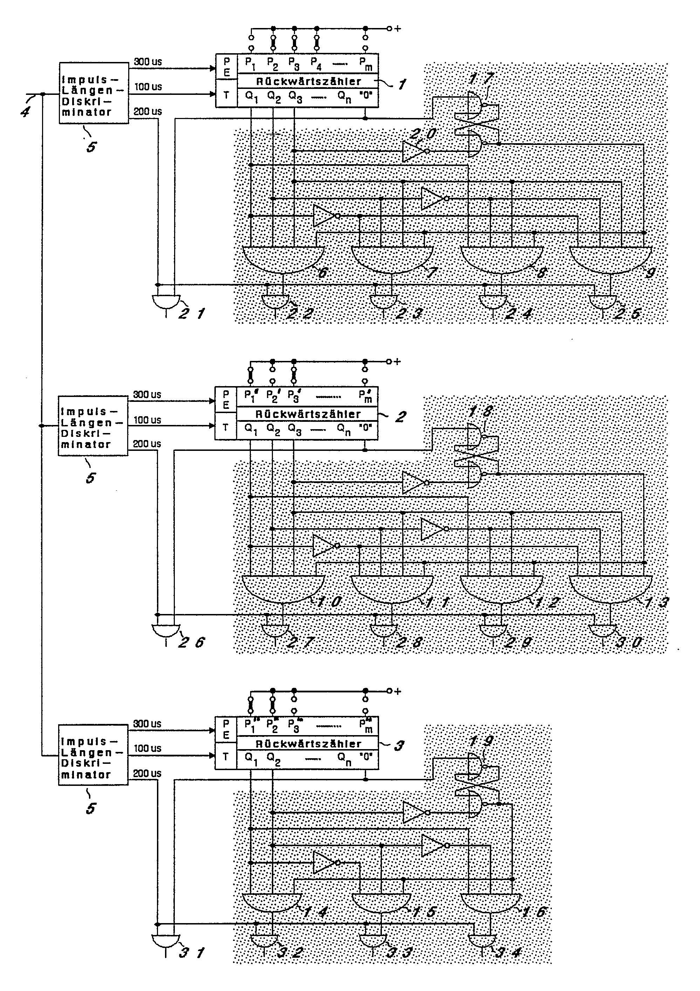

Ein Ausführungsbeispiel der Erfindung ist in der Zeichnung dargestellt.

Die in der einzigen Figur gezeigte Schaltungsanordnung enthält drei Module bestehend aus einem Impulslängendiskriminator 5 und einem Rückwärts-Zähler 1,2,3, die über Eingänge P1 bis PM, P1' bis PM' bzw. P1'' bis PM'' auf einen vorprogrammierten Zählerstand einstellbar sind. Die durch die Zähler 1 bis 3 belegten Zählbereiche schließen aneinander an und ergeben einen Gesamt-Zählbereich. Dieser ist so gestaltet, daß jeder Zählerstand innerhalb dieses Bereiches nur durch gerade einen der Zähler eingenommen wird. Konkret bedeutet dies hier, daß der Zähler 1 Zählerstände zwischen 14 und 11, der Zähler 2 zwischen 9 und 4 und der Zähler 3 zwischen 3 und 1 einnimmt und daß der Zähler 1 auf den Wert 14, der Zähler 2 auf den Wert 9 und der Zähler 3 auf den Wert 3 geladen wird. Dies geschieht mit Hilfe eines Ladeimpulses, der über eine Steuerleitung 4 auf die Impulslängendiskriminator 5 gegeben wird und der sich in seiner Länge von zwei anderen, über die Steuerleitung 4 ebenfalls von einer zentralen, nicht dargestellten Steuereinheit aus auf die Impulslängendiskriminatoren 5 gegebenen Impulstypen in Form eines Zählimpulses und eines Schaltimpulses unterscheidet.

Diese Unterscheidung geschieht beispielsweise in der Weise, daß die Länge des Ladeimpulses gleich 300 Mikrosec. ist, während der Zählimpuls, der die Zähler 1 bis 3 synchron um jeweils eine Einheit zurücksetzt, nur eine Länge von 100 Mikrosec. aufweist. Schließlich besitzt der Schaltimpuls, der dazu dient, nicht dargestellte Verbraucher bei einem entsprechenden Zählerstand der Zähler 1 bis 3 einzuschalten, eine Länge von 200 Mikrosec..

Das Einstellen des jeweiligen Ausgangszählerstandes für die Zähler 1 bis 3 erfolgt neben den Impulsen definierter Länge mit Hilfe einer Programmierung der Setz-Eingänge P1 bis PM'' der Zähler 1 bis 3, die binär ausgebildet sind und für die Zählerstände 14, 9 bzw. 3 die dargestellte Verbindung mit dem +-Potential besitzen.

Die Zähler 1 bis 3 besitzen ferner Binärausgänge $Q_1$ bis $Q_n$ sowie einen Ausgang "0". Die Ausgänge $Q_1$ bis $Q_n$ sind entsprechend dem Zählerstand des jeweiligen Zählers und der Ausgang "0" dann potentialmäßig geschaltet, wenn der Zählerstand 0 erreicht ist. Den Binärausgängen $Q_1$ bis $Q_n$ und 0 sind logische Verknüpfungsglieder in Form von UND-Gattern 6 bis 16 nachgeschaltet. Ferner ist einer der Binärausgänge und der Ausgang 0 jedes der Zähler 1 bis 3 mit einem Flip-Flop 17, 18 bzw. 19 verbunden, deren Ausgänge ebenfalls auf die zugehörigen UND-Gatter 6 bis 9, 10 bis 13 bzw. 14 bis 16 geschaltet sind.

Die UND-Gatter 6 bis 16 sind, ggf. mit Hilfe von weiteren, nicht im einzelnen bezeichneten Invertern - beispielsweise dem Inverter 20 I.V. mit dem Zähler 1 - so geschaltet, daß jeweils maximal nur einer von Ihnen durchgeschaltet ist, wenn die Zähler zunächst auf den Ausgangs-Zählerstand geladen sind und sie anschließend synchron auf den Wert 0 zurückgezählt werden.

Ausgehend von dem genannten Fall, bei dem die Zähler 1 bis 3 mit Hilfe eines Ladeimpulses auf den vorprogrammierten Zählerstand von 14,9 bzw. 3 gesetzt werden, lassen sich die Zähler 1 bis 3 synchron um jeweils eine Einheit mit Hilfe von Zählimpulsen synchron zurückzählen. Diese Zählimpulse werden über die Impulslängendiskriminatoren 5 auf den Zähleingang T der Zähler 1 bis 3 gegeben. Die ersten vier Impulse führen dazu, daß der Zähler 3 von 3 auf den Wert 0, der Zähler 2 von 9 auf den Wert 6 und der Zähler 1 von 14 auf den Wert 11 zurückgezählt werden. Dabei ist beim Zählerstand 3 des Zählers 3 das UND-Glied 14, beim Zählerstand 2 dieses Zählers das UND-Glied 15 und beim Zählerstand 1 das UND-Glied 16 solange durchgeschaltet, bis der maßgebliche Zählerstand 3, 2 bzw. 1 durch den anschließenden Zählerstand 2, 1 bzw. 0 abgelöst wird. Bei jedem dieser Zählerstände des Zählers 3 können nunmehr den UND-Gliedern 14 bis 16 zugeordnete Verbraucher (nicht dargestellt) geschaltet werden. Dies erfolgt mit Hilfe eines Schaltimpulses, der über die Steuerleitung 4 auf die Impulslängendiskriminatoren 5 gegeben wird, die bereits angegebene Länge von 200 Mikrosec. besitzt und weiteren UND-Gliedern 21 bis 34 gleichzeitig zugeführt ist. Die UND-Glieder 22 bis 25, 27 bis 30 und 32 bis 34 sind den UND-Gliedern 6 bis 9, 10 bis 13 bzw. 14 bis 16 nachgeschaltet, während die UND-Glieder 21, 26 und 31 mit den Ausgängen 0 der Zähler 1 bis 3 unmittelbar verbunden sind.

Besitzt z.B. der Zähler 3 einen Zählerstand von 2 und gelangt vor dem nächsten Zählimpuls ein Schaltimpuls (von 200 Mikrosec.) auf das UND-Glied 33, so wird der zugehörige Verbraucher geschaltet. Dabei kann es sich um einen Lastschalter, einen Sensor oder dgl. handeln. Sämtliche anderen Verbraucher, die mit Hilfe der anderen UND-Glieder 21 bis 32 und 34 schaltbar sind, sind währenddessen in ihrem Schaltzustand unverändert. Gelangt nunmehr der nächste Zählimpuls an die Zähl-Eingänge T der Zähler 1 bis 3, so verringern diese jeweils ihren Zählerstand um eine Einheit. Dadurch wird das UND-Glied 33 wiederum deaktiviert, da das UND-Glied 15 nun nicht mehr leitend ist, während nunmehr das UND-Glied 16 allein seinen Ausgangszustand ändert. Gelangt nun erneut ein Schaltimpuls auf die UND-Glieder 21 bis 34, so reagiert allein das UND-Glied 34 darauf und schaltet den zugehörigen Verbraucher wie vorgesehen ein oder aus. Dieses fortlaufende Schalten von zugehörigen Verbrauchern geschieht zunächst für die Verbraucher, die den Zähler (3) mit dem kleinsten Ausgangszählerstand zugeordnet sind, anschließend für die Verbraucher, die dem Zähler (2) mit mittleren Ausgangszählerstand zugeordnet sind und anschließend für die Verbraucher, die dem Zähler (1) mit dem größten Ausgangszählerstand nachgeschaltet sind. Das bedeutet, daß nach 14 Zählimpulsen, die auf die Zähler 1 bis 3 gegeben werden, nur der Verbraucher geschaltet ist, der dem UND-Glied 6 bzw. dem nachgeschalteten UND-Glied 22 zugeordnet ist. Der 15. Zählimpuls schaltet, sofern anschließend ein Schaltimpuls von 200 Mikrosec. über die Steuerleitung 4 eingeht, allein den Verbraucher, der durch das UND-Glied 21 angesteuert wird. Geht nun ein weiterer Zählimpuls auf die Zähleingänge T der Zähler 1 bis 3 ein, so sind sämtliche Ausgänge der Zähler 1 bis 3 potentialmäßig nicht belegt und die zugehörigen Verbraucher nicht geschaltet.

Auf diese Weise ist es möglich, mit Hilfe jedes der Zähler 1 bis 3 mehrere Verbraucher zu schalten. Wie dargestellt, ist die Beschaltung jedes der Verbraucher eindeutig und hängt von einem Zählerstand eines zugehörigen Zählers ab, der eindeutig bestimmt ist und sich von dem Zählerstand unterscheidet, bei dem jeweils ein anderer Verbraucher eingeschaltet bzw. ausgeschaltet bzw. derselbe Verbraucher in seinem Schaltzustand verändert wird. Mit nur wenigen Zählern lassen sich somit eine Vielzahl von Verbrauchern eindeutig schalten.

## Ansprüche

1. Schaltungsanordnung für mehrere elektrische Verbraucher, die abhängig vom individuellen Ausgangszählerstand eines zugehörigen Zählers dann geschaltet sind, wenn die für eine Veränderung des Zählerstands um eine Einheit in gleicher Weise angesteuerten Zähler einen Zählerendstand erreichen, dadurch gekennzeichnet, daß mindestens einem der Zähler (1,2,3) ein weiterer Verbraucher zugeordnet ist, der dann geschaltet ist, wenn der Zähler einen Zählerstand aufweist, der zwischen dem Zählerausgangsstand und dem Zählerendstand liegt.

2. Schaltungsanordnung nach Anspruch 1, dadurch gekennzeichnet, daß die Zähler (1,2,3) ihren Zählerstand in voneinander unabhängigen Bereichen eines Gesamtzählbereiches ändern.